# EUROPEAN PATENT SPECIFICATION

(11) **EP 3 231 153 B1**
(45) Date of publication and mention of the grant of the patent: **29.09.2021**
(21) Application number: 15823726.3
(22) Date of filing: 09.12.2015
(51) Int. Cl.: H04L 29/06

(54) **DISTRIBUTING A NETWORK ACCESS POLICY**
VERTEILUNG EINER NETZWERKZUGANGSRICHTLINIE
DISTRIBUTION D'UNE POLITIQUE D'ACCÈS À UN RÉSEAU

(30) Priority: 09.12.2014 GB 201421840
(43) Date of publication of application: 18.10.2017
(73) Proprietor: Blackdice Cyber Limited, Wrexham, Wales LL13 8LW (GB)
(72) Inventor: HAGUE, Paul Francis, Sheffield S26 1JG (GB)
(74) Representative: Wilson Gunn
(86) International application number: PCT/GB2015/000321
(87) International publication number: WO 2016/092251

(56) References cited:
- EP-A1- 1 564 957
- US-A1- 2011 231 892
- None

## Description

### CROSS REFERENCE TO RELATED APPLICATIONS

This application represents the first application for a patent directed towards the invention and the subject matter.

### BACKGROUND OF THE INVENTION

### 1. Field of the Invention

The present invention relates to the distribution of a network access policy from a gateway device to each one of a plurality of user terminals forming a logical device family.

### 2. Description of the Related Art

It is known to define policies specifying the terms of access to a network, such as the Internet. These policies often form part of firewall or internet filtering software bundled with operating systems or sourced separately, and are thus invoked only on the terminal on which the software is installed. Other systems are offered by internet service providers for subscribers, and thus apply access policies at the internet connection-level rather than at the device level. These two approaches have been successful for a substantial period of time by preventing inappropriate content from being sourced by, for example, young children.

For example, US Patent Application No. 2011/0231892 discloses a system for selectively blocking access to the Internet. The system includes a policy engine that monitors traffic being routed to devices and blocks traffic that comes from particular websites, with each device having a separate policy including a list of blocked websites and a time period over which they are blocked.

However, an emerging problem is developing in which particular users have many devices which can connect to a network such as the Internet by more than one method. In addition, different users, possibly in the same household, require different levels of management in terms of what they can and cannot access on the Internet, and how they should be allowed to interact with peers on the network. A smartphone, for example, can interact with the Internet and resources on it via a home internet connection, wireless hotspots, and via a cellular data connection. It can also interact with peers on the subscribed-to GSM (global system for mobile communications) network via voice, SMS (short message service) and MMS (multimedia message service).

Neither the software approach nor the internet service provider approach for the provision of policy enforcement allows for easy management or consistently applied terms of access to these different networks. There is therefore a need for a solution which allows the enforcement of a network access policy for a particular user, which is agnostic as to which of their devices they are using and which mode of network access they are using. There is also a need to enable monitoring and moderation of the interaction of particularly younger users of the Internet and GSM networks within the framework of the network access policy.

### BRIEF SUMMARY OF THE INVENTION

According to an aspect of the present invention, there is provided a system in which a network access policy may be distributed from a gateway device to each one of a plurality of user terminals forming a logical device family for enforcement of the network access policy.

According to another aspect of the present invention, there is provided a method in which a network access policy is distributed from a gateway device to each one of a plurality of user terminals forming a logical device family for enforcement of the network access policy.

### BRIEF DESCRIPTION OF THE DRAWINGS

Figure 1 shows an exemplary technical environment in which the present invention may be deployed;
Figure 2 shows network access policy 109;
Figure 3 shows a high-level flow of procedures carried out in the system according to the present invention;
Figure 4 shows the hardware components making up local gateway 105;
Figure 5 shows instructions and data held in memory in the local gateway 105 for execution by processor 404;
Figure 6 shows the hardware forming remote enforcement server 110;
Figure 7 shows a mapping of instructions held in memory by the remote enforcement server 110 and run thereon;
Figure 8 shows the hardware forming first smartphone 102;
Figure 9 shows USIM 806;
Figure 10 shows a mapping of instructions in memory and being run by smartphone 102;
Figure 11 shows a mapping of instructions in memory and run by smartphone **103**;
Figure 12 shows an exemplary graphical user interface made available by the local gateway 105;
Figure 13 shows an overview of procedures invoked by when adding a new device and its registration with local gateway 105;
Figure 14 shows an exemplary set of graphical user interfaces presented to a user during configuration and registration of a new device with local gateway 105;
Figure 15 shows procedures undertaken by local gateway 105 following step 1307;
Figure 16 shows procedures carried out by the distribution service 508 to update a network access policy;
Figure 17 shows steps carried out during step 1605 to distribute a policy to all applicable devices;
Figure 18 shows the relationship between devices, users, policies and logs;
Figure 19 shows a high level overview of procedures undertaken to enforce a network access policy against TCP/IP data;
Figure 20 shows steps carried out to determine whether a content being received via the Internet complies with a policy;
Figure 21 shows steps carried out to process packet contents so as to perform content based filtering;
Figure 22 shows step **2002** in greater detail;
Figure 23 shows example warning dialog boxes which can be displayed on a user terminal;
Figure 24 shows Procedures carried out by the baseband service 1003 when a GSM access request is received;
Figure 25 shows procedures carried out to assess a GSM access request's compliance with a policy; and
Figure 26 shows step **2503** in greater detail.

### DETAILED DESCRIPTION OF EXAMPLE EMBODIMENTS

### Figure 1

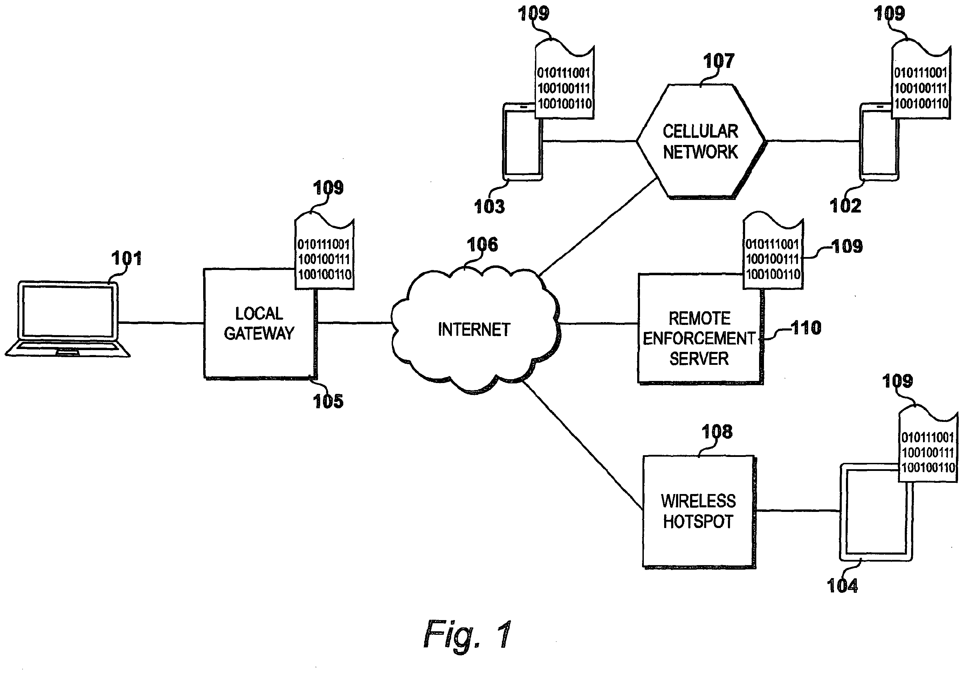

An exemplary technical environment in which the present invention may be deployed is illustrated in Figure 1, in which a number of user terminals are shown and form a logical device family.

The device family comprises in the example a first user terminal in the form of a personal computer **101** (in this example a notebook), a second user terminal in the form of a first smartphone **102,** a third user terminal in the form of a second smartphone **103,** and a fourth user terminal in the form of a tablet computer **104.**

In the present example, the notebook computer **101** is connected to a residential local area network provided with internet access by a local gateway **105.** The local gateway **105** provides routing and modem functionality of the known type between the local area network and the Internet. In this way, it acts as a router and provides notebook computer **101,** and any other connected device, with access to the Internet **106.**

As shown in the Figure, the first smartphone **102** and the second smartphone **103** are connected to a cellular network **107** to provide telecommunication services such as voice, short message service etc. in accordance with GSM. The cellular network **107** also provides access to the Internet **106** by providing data services, possibly using HSPA (high-speed packet access) or LTE (long-term evolution) connections to the first smartphone **102** and the second smartphone **103.**

The tablet computer **104** is in the present example connected via a wireless network connection (e.g. WiFi®) to a wireless hotspot **108** which provides Internet access.

In addition to typical residential gateway functionality, the local gateway **105,** in accordance with the present invention, manages the configuration, distribution and local enforcement of a network access policy **109** to each device in the logical device family.

Policy enforcement for Internet traffic outwith the residential network established by the local gateway **105** is handled either on-device or by way of a remote enforcement server **110,** which may be connected to via the Internet **106.** This in the present embodiment is achieved by setting appropriate proxy server settings on the user terminal, or alternatively could be achieved by establishing the remote enforcement server **110** as a transparent proxy by setting the DNS (domain name system) server settings of the client device to point to the remote enforcement server **110.**

In the present example, the smartphone **102** and tablet computer **104** run what will be termed herein an "open" mobile operating system, i.e. one which allows the installation and running of background services that have access to data and telephone interfaces. Examples of such operating systems include Google® Android® and Microsoft® Windows Phone®.

The smartphone **103** on the other hand is one which runs what will be termed herein a "closed" mobile operating system, i.e. one which does not allow the installation and running of background services that have access to data and telephone interfaces. Examples of such operating systems include Apple® iOS®.

The present invention provides technical solutions to ensure that policy enforcement is consistent regardless of the operating system type, and the type of network being used. In this way, each of the user terminals abides by its installed network access policy irrespective of the network it is connected to.

It will be appreciated by those skilled in the art that the gateway 105 is in practice capable of managing a number of network access policies for a large number of devices, so as to support different network access policies for different users.

### Figure 2

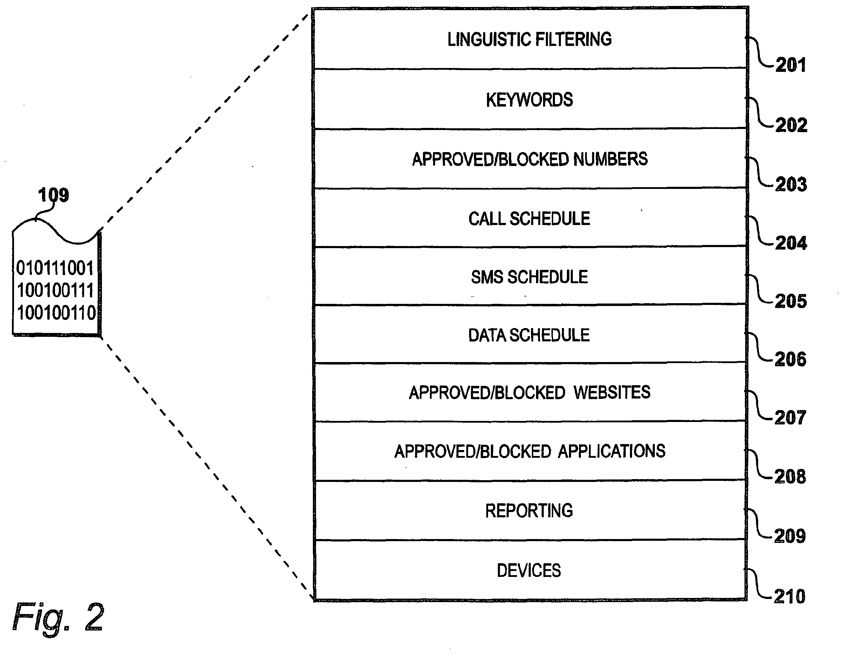

Network access policy **109** is illustrated in Figure 2. In the present embodiment, the network access policy is a bit array which encodes various user-defined parameters detailing particular restrictions on network access. In the present embodiment, the network access policy is encrypted, possibly using public key encryption.

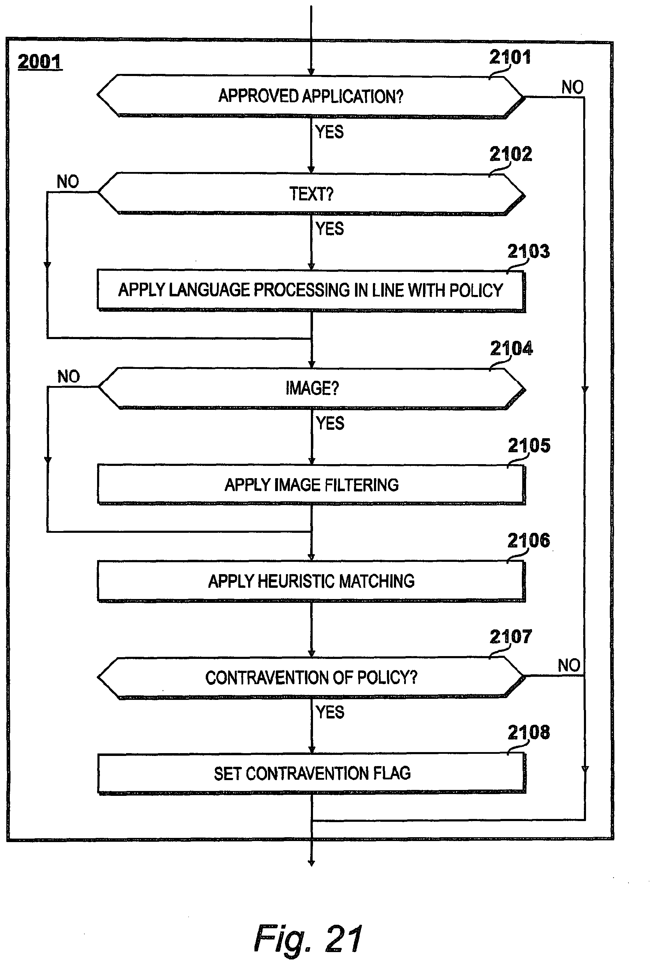

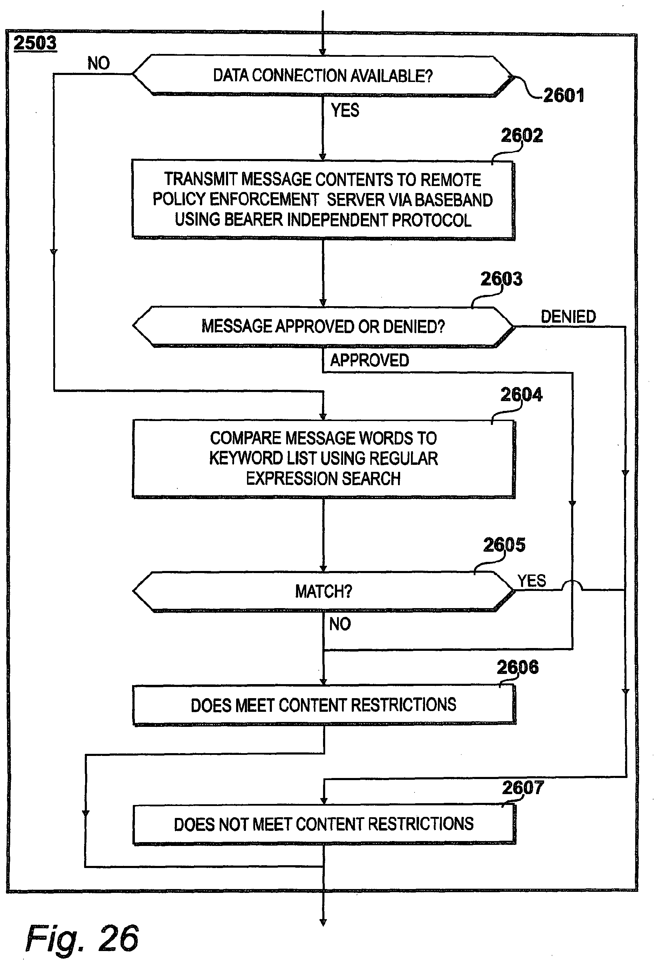

The current embodiment of the present invention provides support for specifying acceptable use of the internet. This is achieved by performing linguistic filtering of messages and content being sent from and received at user terminals, and so the network access policy **109** includes a first corresponding field **201** to, in one embodiment, either indicate that filtering should be on or off (binary data). Alternatively, different degrees of linguistic filtering could be selected, possibly prohibiting foul language, or alternatively particular sentiments, along with prohibiting access to particular kinds of content. As will be described further with reference to Figure 21 and Figure 26, sophisticated natural language processing techniques can be invoked to probe messages and determine whether they are appropriate or not, as well as processing of images to identify if their content is acceptable or not in the context of the network access policy.

Support for keyword identification is provided, with a second corresponding field **202** allowing the storage of unwanted keywords.

Either a whitelist or a blacklist of telephone numbers can be stored in a third corresponding field **203,** preventing calls and messages being sent to and received from a GSM-enabled device.

A schedule defining allowed periods in which calls can be made and received is stored in a fourth corresponding field **204,** and a schedule defining allowed periods in which SMS messages can be sent and received is stored in a fifth corresponding field **205.** A data schedule is defined in a sixth corresponding field **206.**

Further acceptable usage can be defined, with provision for either a whitelist or a blacklist of websites which may be stored at a seventh corresponding field **207,** along with a whitelist or a blacklist of applications which may be stored at an eighth corresponding field **208.** Levels of reporting can be defined in a ninth corresponding field **209,** allowing simple logging of the fact that policy contraventions have occurred to full storage of the content contravening the policy for example. Finally, devices to which the policy is applicable are stored in a tenth corresponding field **210.** Unique identifiers, possibly a hash of the MAC (media access control) address of each device, are used.

It will be appreciated by those skilled in the art that the exact terms specified in the network access policy **109** can be added to and reduced in accordance with the implementation, and rather the present invention is directed to the policy's consistent application across devices and networks, irrespective of what the policy specifies.

### Figure 3

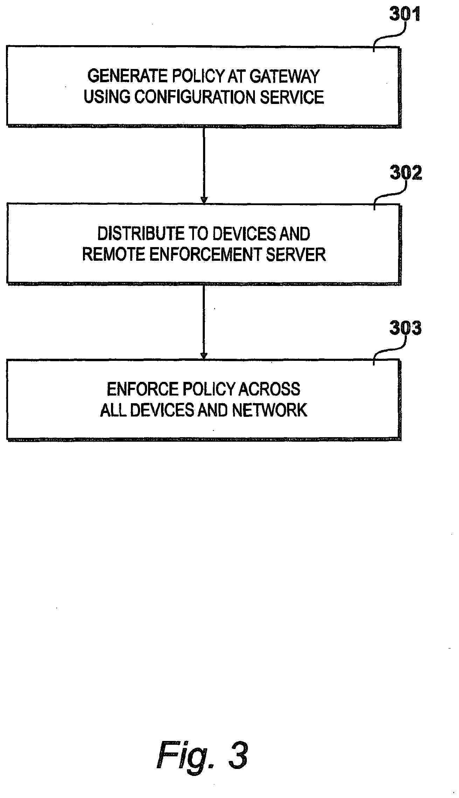

A high-level flow of procedures carried out in the system according to the present invention is set out in Figure 3.

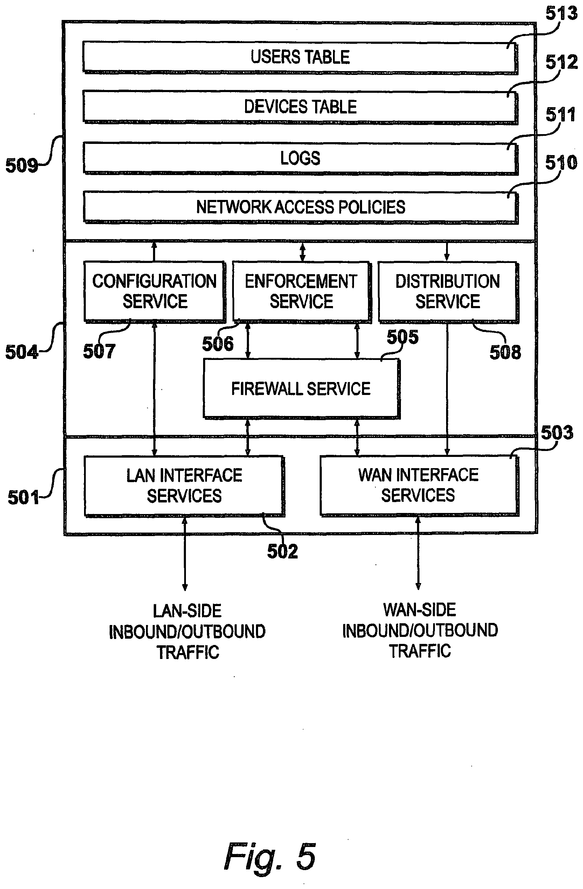

At step **301,** a network access policy is generated at the local gateway **105,** using a configuration service provided thereon **(508,** Figure 5). At step **302,** the network access policy is distributed to each target user terminal **101** to **104,** along with the remote enforcement server **110.** Following distribution of the network access policy, it is enforced on all target user terminal **101** to **104,** on every network it connects to. In this way, the user terminals abide by the network access policy whether they are connected to the residential local area network, or to a cellular data network, or even to for example a wireless hotspot.

### Figure 4

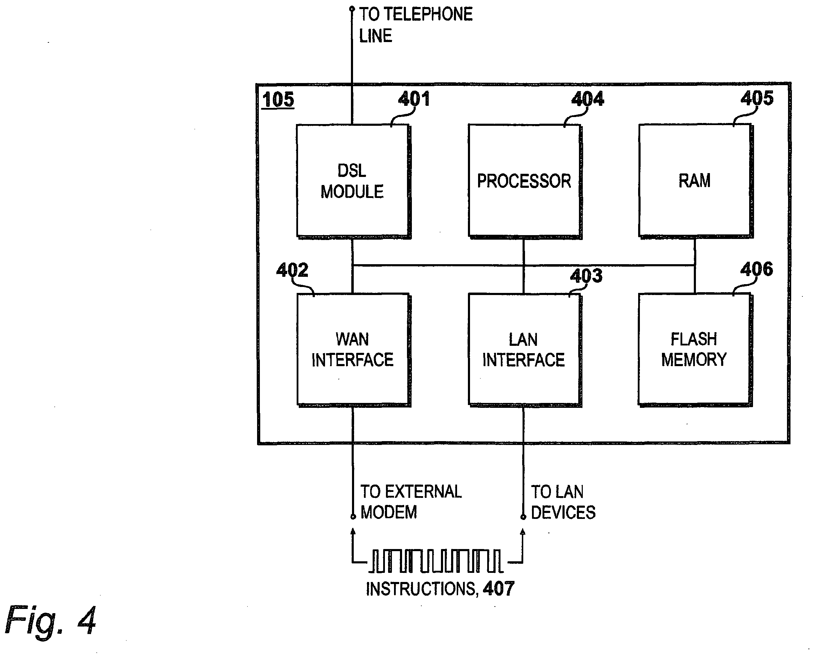

As described previously with reference to Figure 1, local gateway **105** provides routing functionality between the Internet **106** and a residential local area network. The hardware components making up local gateway **105** are shown in Figure 4.

Connectivity to the Internet **106** is provided by either a DSL (digital subscriber line) module **401** which may be connected to a telephone line, or a WAN (wide area network) interface **402** which may be connected to an external cable modem for example. Both of DSL module **401** and WAN interface **402** are of the known type and their operation will be familiar to those skilled in the art.

Connection to a residential local area network is provided by a LAN (local area network) interface **403** providing Ethernet connectivity, and which may be connected to other LAN devices, such as a WLAN (wireless LAN) interface providing IEEE 802.11-type connectivity for user terminals.

A processor **404** executes instructions to facilitate routing of network traffic between the local area network and the Internet **106.** In addition, the processor **404** executes instructions that facilitate policy configuration, distribution and enforcement. These instructions along with additional state information are stored in RAM (random access memory) **405,** following loading from non-volatile Flash memory **406.** A mapping of instructions within the memory of local gateway **105** is shown in Figure 5. These instructions, illustrated as **407,** may be loaded into the Flash memory in the local gateway **105** by way of a data upload, either from a remote server on the Internet **106,** or a local device on the LAN.

In an alternative embodiment, the processor **404,** RAM **405** and Flash memory **406** may be provided on a discrete add-in card for standard residential gateways, supplementing their existing processing capability.

### Figure 5

Instructions and state held in memory in the local gateway **105** for execution by processor **404** are mapped out in Figure 5.

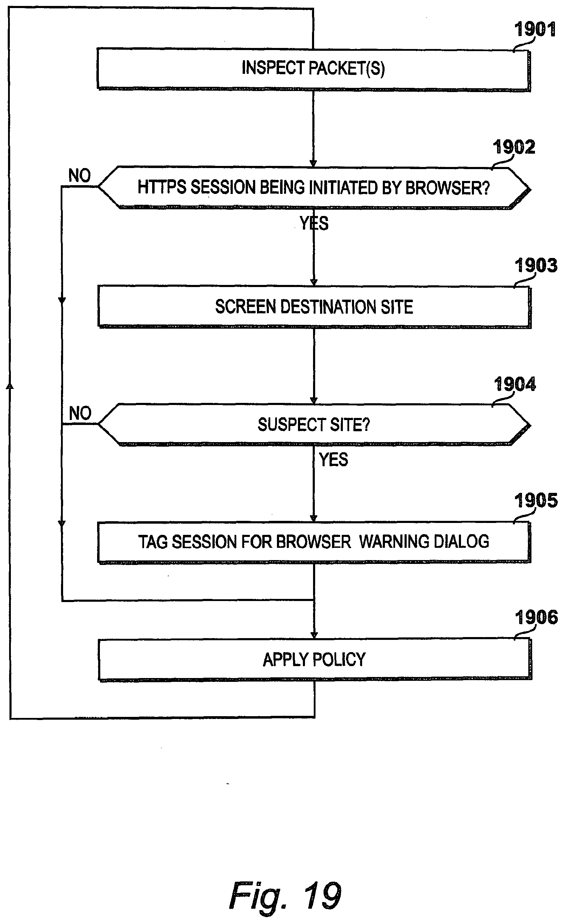

At a lower layer **501,** LAN interface services **502** are stored and run for managing local area network tasks, and include typical services such as DHCP (dynamic host configuration protocol) etc. Wan interface services **503** are stored and run for managing wide area network tasks, such as network address translation etc. At a middle layer **504,** a firewall service **505** manages the flow of traffic between the LAN and WAN sides of the local gateway **105.** Procedures carried out by the firewall service **505** will be described with reference to Figure 19.

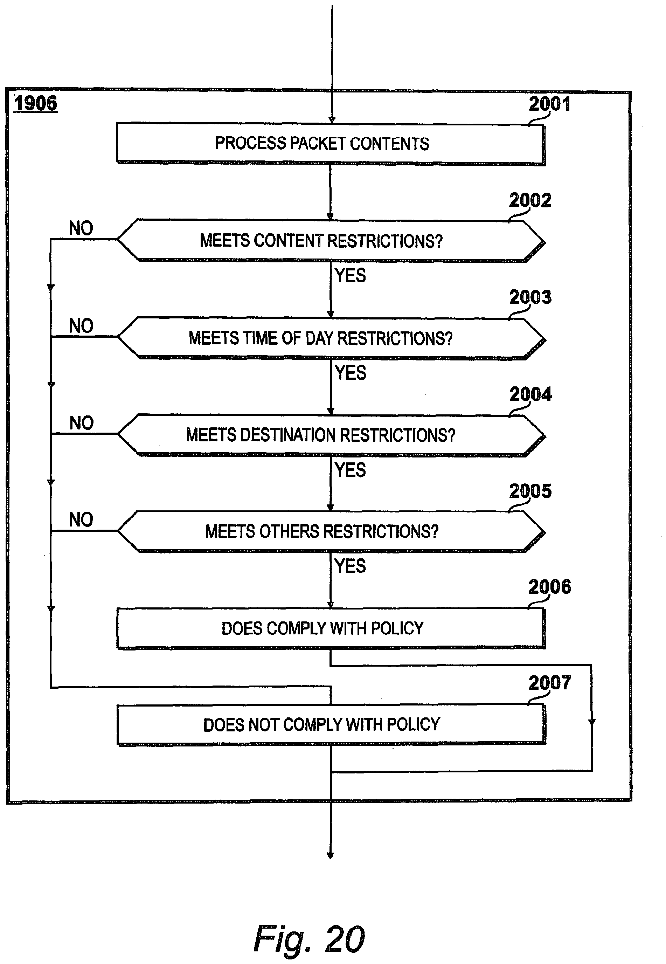

The firewall service **505** operates in conjunction with an enforcement service **506,** referring traffic to it to assess its compliance with the appropriate network access policy. Procedures carried out by enforcement service **506** will be described with reference to Figures 20 to 22.

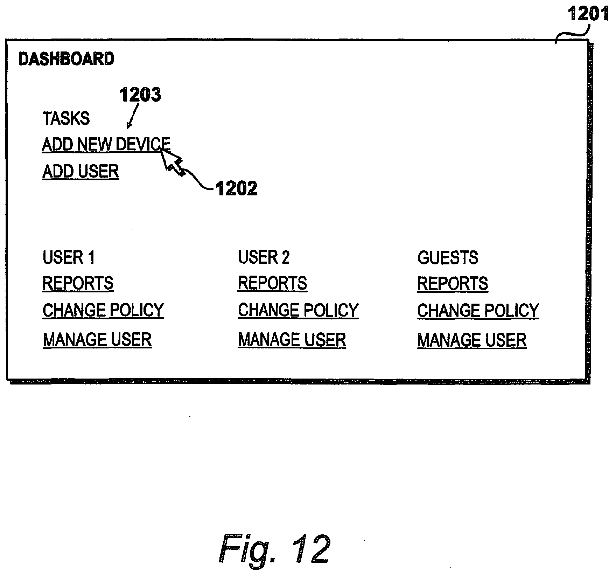

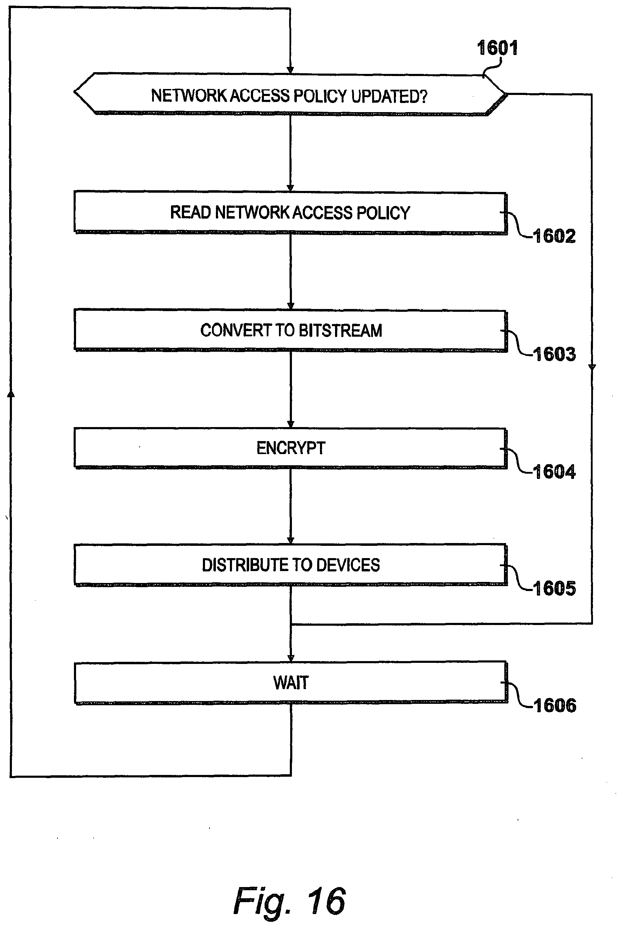

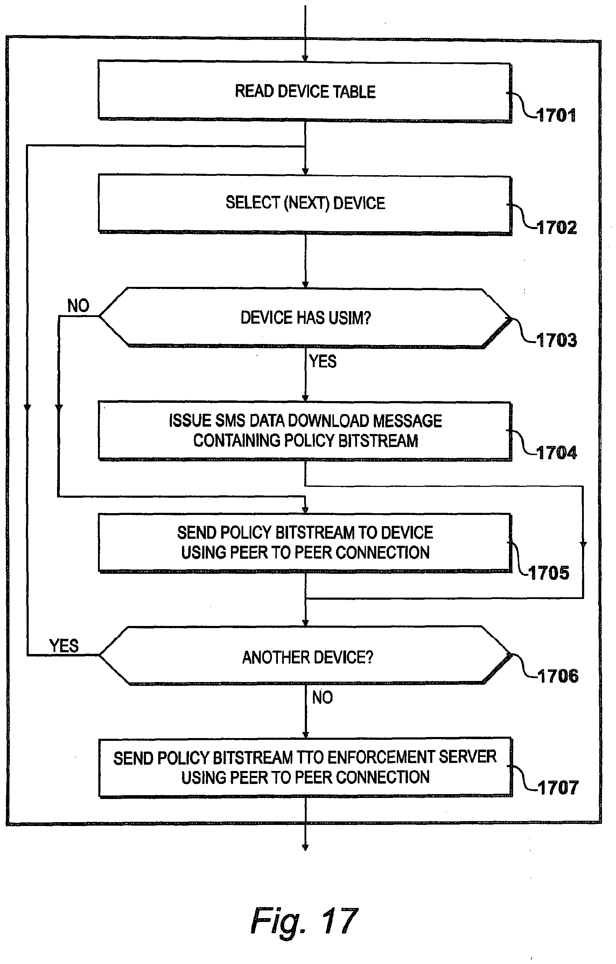

Operating alongside enforcement service **506** is a configuration service **507,** and a distribution service **508.** Configuration service **507** allows the creation and application of policies to particular devices and users, and distribution service **508** is responsive to such changes so that network access policies stored on devices can be updated appropriately. Procedures carried out by configuration service **507** will be described with reference to Figures 12 to 15, and procedures carried out by the distribution service **508** will be described further with reference to Figures 16 and 17.

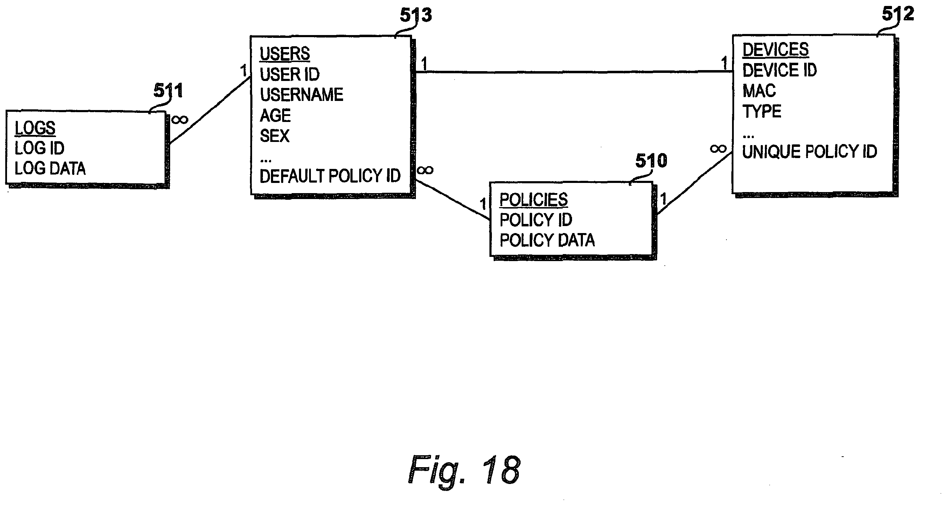

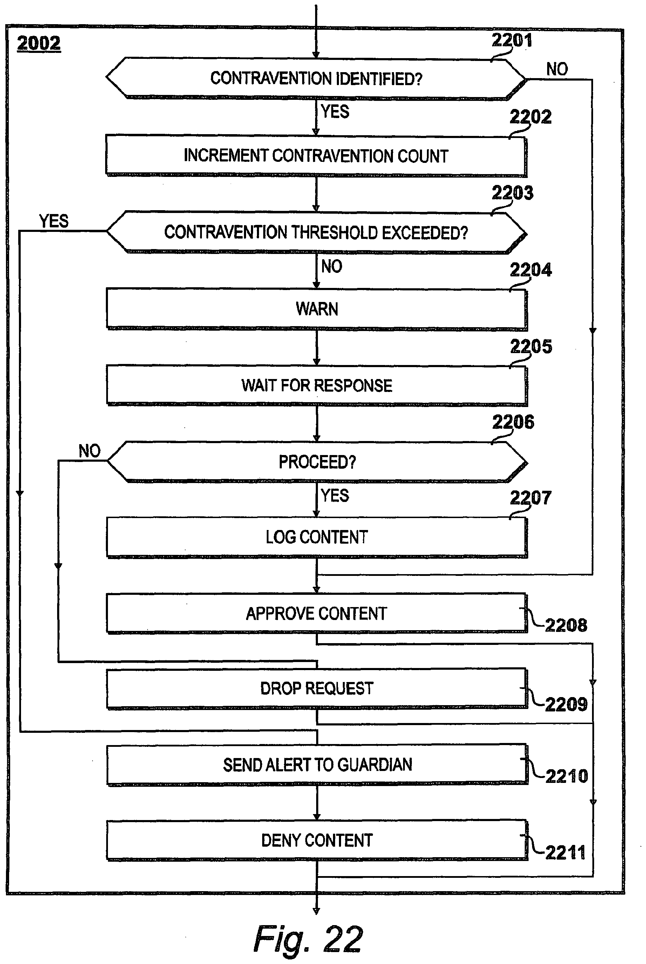

State and data is stored at a top layer **509,** for reference by the various services. Network access policies **510,** including network access policy **109,** are written to by configuration service **507,** and read by enforcement service **506** and distribution service **508.** Logs are written directly to by enforcement service **506,** as will be described with reference to Figure 22. A devices table **512** stores the required detail about each user terminal, such as MAC address, device type, etc. along with its users and currently installed network access policy. Details of registered users are stored in a users table **513,** which contains data pertaining to their name, age, sex, assigned devices and which of the access policies **510** they must abide by, etc. The relationship between the access policies, logs, devices table and users table is described with reference to Figure 18.

### Figure 6

As previously described with reference to Figure 1, remote enforcement server **110** provides policy enforcement when user terminals are not connected to the Internet **106** via local gateway **105.** This is achieved in the present implementation by adjusting either the proxy server settings or the DNS settings of the user terminal such that Internet traffic routes via the remote enforcement server **110.** In practice, this means that irrespective of whether the user terminal is connected to the Internet for example via cellular network **107** or via wireless hotspot **108,** data traffic can be inspected for policy compliance.

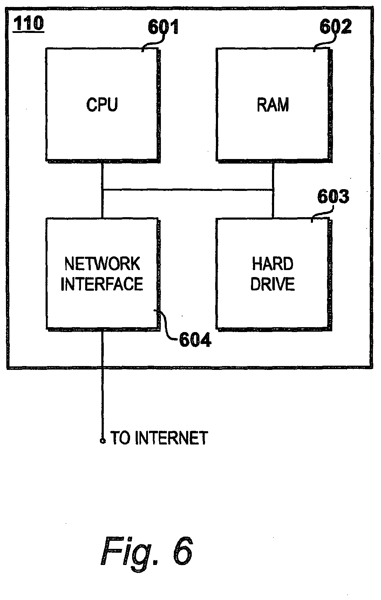

The hardware forming remote enforcement server **110** is shown in Figure 6, and is of the conventional type including a processor provided by a CPU (central processing unit) **601,** memory provided by RAM **602,** permanent storage in the form of a hard drive **603** and a network interface **604.** It will be appreciated that in an embodiment, remote enforcement server **110** could be a virtual machine hosted by a hypervisor running on a physical device in the known manner.

In practice, instructions for the remote enforcement server **110** are stored on hard drive **603,** loaded into RAM **602** and run by CPU **601.**

### Figure 7

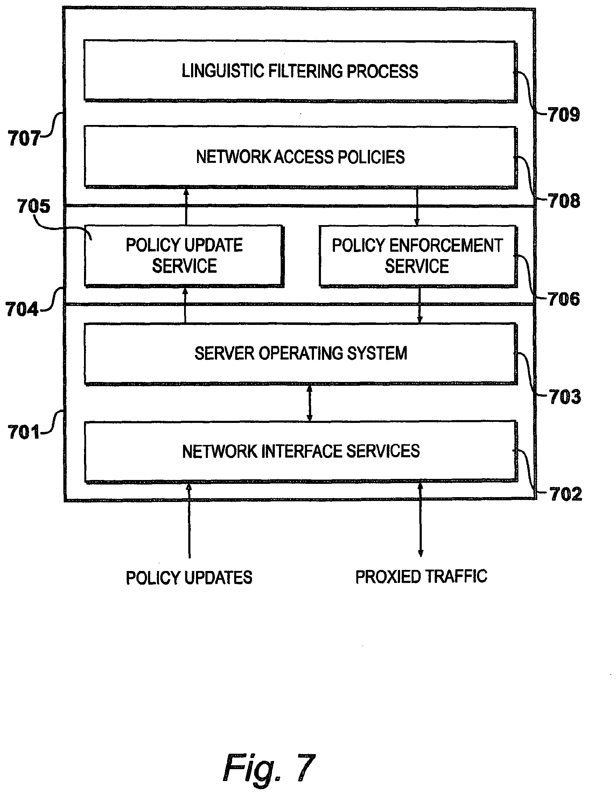

A mapping of instructions and state held in memory by the remote enforcement server **110** and run thereon is shown in Figure 7.

At a lower level **701,** network interface services **702** are provided which in conjunction with the server operating system **702** - in this embodiment a GNU/Linux® distribution - allow the receipt and retransmission of proxied traffic from user terminals subject to network access policies. At a middle level **704,** a policy update service **705** responds to policy updates issued by distribution service **508** over the Internet **106.** A policy enforcement service **706** is also provided to carry out processing of traffic in accordance with the corresponding network access policy. Procedures undertaken by the policy enforcement service **706** in relation to a particular network access policy for a particular device are the same as those carried out by the enforcement service **506** which runs on local gateway **105.**

A higher level **707** contains access policies **708,** including, in the present exemplary environment, network access policy **109.** In one embodiment, all policies applicable to each device for every gateway in are stored by the remote enforcement server **110.** Policy enforcement service **706** processes network traffic by identifying the source of the network traffic and comparing it to the corresponding policy, possibly using a hash of the MAC address of the device from which the traffic originated. Such methods will be apparent to those skilled in the art.

Finally, a sophisticated linguisiting filtering process **709** is provided to provide support for natural language processing and sentiment analysis on messages either proxied through the remote enforcement server **110,** or dispatched to it by smartphones **102** and **103,** for example, as will be described with reference to Figure 26.

In an alternative embodiment, the remote enforcement server **110** is specific to only the local gateway **105,** and so only stores the policies which are also stored on the gateway device. In a further possible embodiment, the remote enforcement server **110** exists for only one device, and, in this case, is virtualised so as to allow it to be spawned on an on-demand basis when the corresponding device is not connected to the Internet **106** via local gateway **105.**

### Figure 8

In practice, development and installation of services for policy enforcement on personal computers, such as notebook computer **101,** is a routine task, as is the configuration of proxy and DNS server settings.

However, it is not always possible to enforce policies in this way on GSM communications (voice and SMS), particularly in closed mobile operating systems. Thus the present invention adopts a technical approach to providing an on-device solution to enforcing a network access policy to voice and SMS communications over a cellular network.

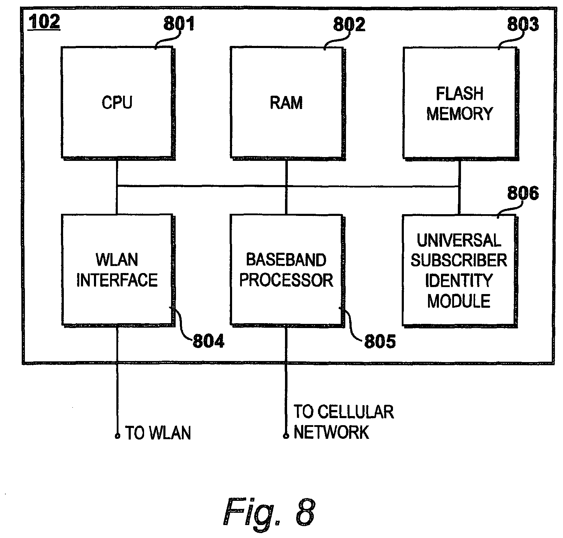

The hardware forming first smartphone **102** is shown in Figure 8, with the hardware for second smartphone **103** being identical. The first smartphone **102** has processing capability provided by a CPU **801,** typically an ARM® processor, and memory provided by a combination of RAM **802** and non-volatile Flash memory **803.** A WLAN interface **804** is provided and is configured to allow first smartphone **102** to connect to wireless local area networks such as those of the IEEE 802.11-type. In addition, connection to cellular networks such as cellular network **107** is facilitated by a baseband processor **805** in combination with a USIM (universal subscriber identity module) **806.** It will be appreciated that each hardware component identified in Figure 8 is of the known type, and that the approach adopted by the present invention is agnostic as to the particular hardware layout of the mobile device, taking advantage of the fact that all smartphones must be compliant with mobile telecommunications standards.

### Figure 9

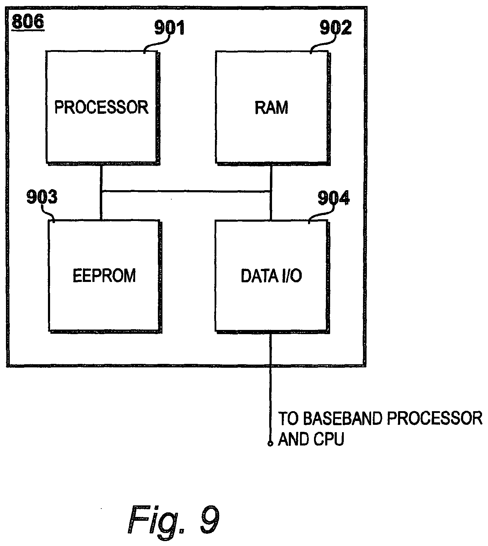

USIM **806** is shown in greater detail in Figure 9. As will be familiar to those skilled in the art, a subscriber identity module conforms to the Smart Card standard, and as such includes a degree of in-built computing capability to support identity services etc. Thus, the USIM **806** includes its own processor **901,** RAM **902,** permanent storage in the form of EEPROM **903** and a data interface **904** for interfacing with the host - in this case the CPU **801** and baseband processor **805** of smart phone **102.** The provision of processing capability allows the USIM to run processes and applications when it is in use by the smartphone **102.** Built on the Java Card Platform, the applications (either applets or servlets) communicate with the smartphone **102** using the USIM application toolkit.

### Figure 10

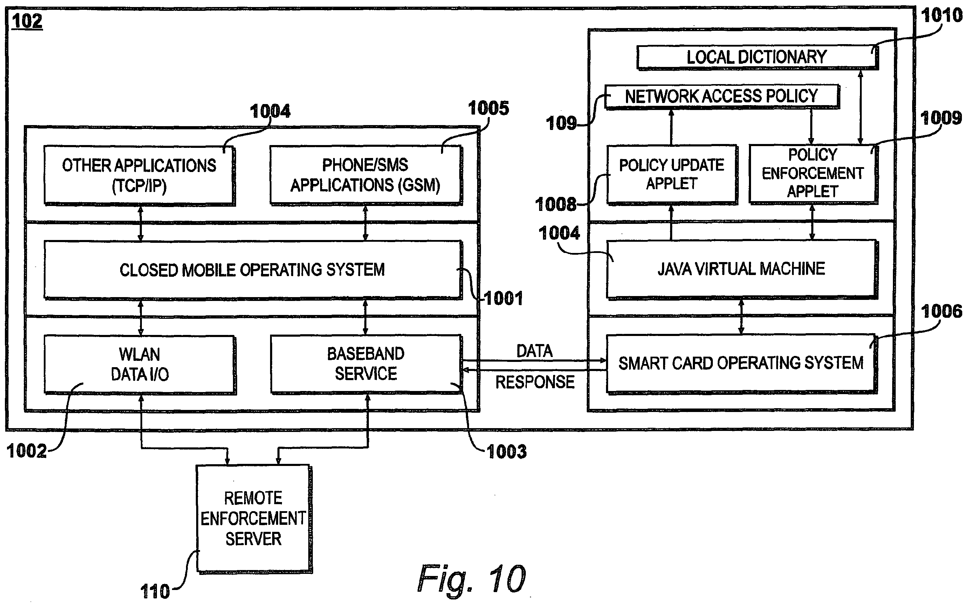

A mapping of instructions in memory and being run by smartphone **102** is shown in Figure 10. It will be recalled that smartphone **102** runs what has been termed herein a closed mobile operating system **1001.** The implication of this is that background services that listen for and act upon certain events in the required way in order to enforce a network access policy cannot always be installed. The present invention therefore adopts for such operating system types a technical approach to providing the required functionality within the constraints of the programming environment.

The closed mobile operating system **1001** is capable of providing data connectivity utilising TCP/IP via both a WLAN data I/O service **1002** presented by the WLAN interface **804** for data connectivity over a wireless LAN, and via a baseband service **1003** presented by the baseband processor **805** for data connectivity over cellular network **107.** The specific mode of TCP/IP data connectivity is abstracted by the closed mobile operating system **1001** which simply allows applications **1004** to send and receive data, with the exact channel over which data is sent and received being managed by the operating system. The present invention solves the problem of enforcement of network access policies upon data connections by specifying, in the present embodiment, the remote enforcement server **110** as both a proxy server for the WLAN data I/O service **1002,** and a proxy server for baseband service **1003** in its APN (access point name) settings.

In order to enforce the network access policy for telephone and short message service applications **1005** which utilise the GSM functionality of the baseband processor **804,** the present invention adopts a different approach. This is because it is not possible solely within the confines of the closed mobile operating system **1001** to provide a mechanism by which calls and SMS messages can be vetted against a network access policy.

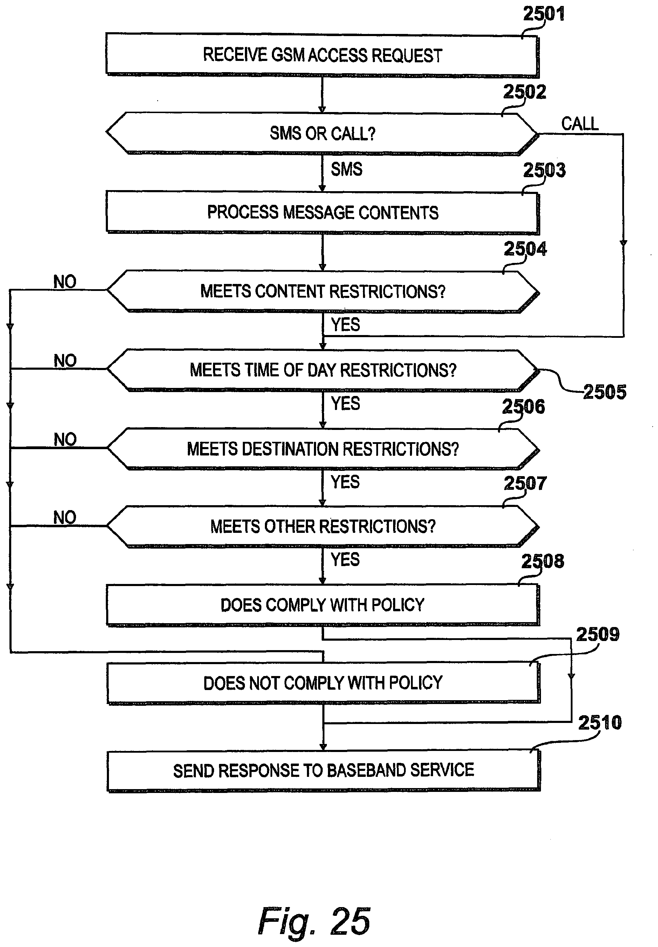

As described previously with reference to Figure 9, the USIM 806 includes a degree of in-built computing capability, managed by a smart card operating system **1006.** Java bytecode is executed by a Java virtual machine **1007** running on top of the smart card operating system **1006** - the arrangement of which is standard for smart cards. In combination, the smart card operating system **1006** and the Java virtual machine **1007** provide USIM application toolkit functionality. In the present embodiment two applets are provided for facilitating the application of network access policies: a policy update applet **1008,** and a policy enforcement applet **1009.** Both of the applets have access to and may respectively write to (for updating purposes) and read from the network access policy **109.** In the present embodiment, a local dictionary **1010** is also provided for local linguistic filtering and keyword matching for SMS messages - the application of which will be described with reference to Figure 25.

In the present example, the policy update applet **1008** is registered with the USIM application toolkit for receiving data when SIM data download-type SMS messages are received. In this way, network access policies can be silently received at the USIM **806,** whereupon the policy update applet **1008** may update the access policy **109.** This process will be described further with reference to Figure 16 and 17.

The policy enforcement applet **1009** is also registered with the USIM application toolkit, but for Call Control and SMS Control events. These events are raised when the baseband service **1003** either asks permission from the USIM **806** to begin a call or send an SMS, or connect an incoming call or receive an SMS. In this way, GSM network access is managed by the policy enforcement applet **1009** against the policy.

In an alternative embodiment, the proxy server settings for the baseband service **1003** could be set to point to a Java servlet provided within the USIM **806** alongside the policy update and enforcement applets. Policy enforcement for HTTP requests for particular websites and from particular applications could then take place locally on the smartphone **102,** or the servlet could be configured to direct requests to an external service such as the remote enforcement server **110** using bearer independent protocol to transmit packet data via the baseband service **1003.**

It will therefore be seen that the present invention provides a mechanism by which policy enforcement can be achieved on smartphone **102,** in terms of both controlling network access irrespective of the particular network and network type.

### Figure 11

As described previously, smartphone **103,** whilst having substantially identical hardware to smartphone **102,** runs what is termed herein an "open" mobile operating system and as such allows the installation of background services which can handle and control events such as data requests over wireless networks and cellular networks, along with control over GSM functionality in accordance with the network access policy **109.**

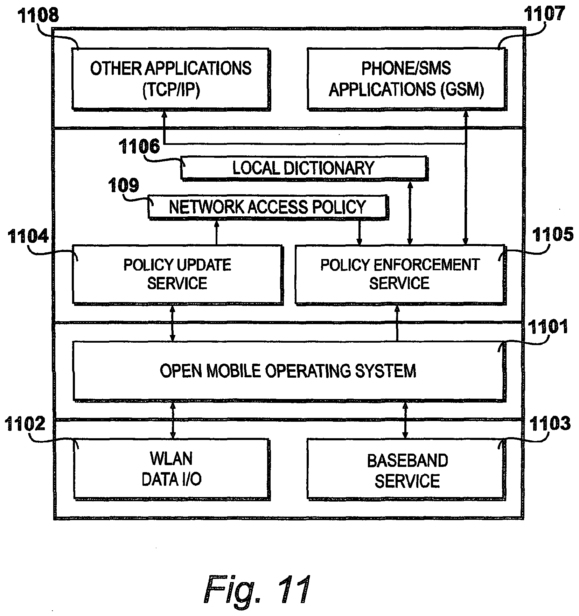

A mapping of instructions in memory which are run by smartphone **103** is therefore illustrated in Figure 11. Running an open mobile operating system **1101,** smartphone **103** is capable of providing data connectivity utilising TCP/IP via both a WLAN data l/O service **1102** and via a baseband service **1003** for data connectivity over cellular network **107.** A policy update service **1104** and a policy enforcement service **1105** provide substantially the same functionality as policy update service **1004** and policy enforcement service **1005,** but instead run on the CPU of smartphone **103** rather on its USIM. Policy update service **1104** and policy enforcement service **1105** again maintain and refer to a copy of the access policy **109.** This allows the policy enforcement service **1105,** possibly with reference to a local dictionary **1106,** to enforce the access policy **109** against both GSM calls and SMS messages from phone and SMS applications **1107,** and against TCP/IP traffic from other applications **1108.**

It will be appreciated that the present invention therefore provides a full suite of functionality so as to enable the enforcement of policies regardless of operating system type and regardless of network type. Indeed, the USIM applets described herein could be installed in combination with the services described herein if necessary, depending on the technical constraints of the device and its operating system.

### POLICY CONFIGURATION AND DISTRIBUTION

### Figure 12

An exemplary graphical user interface made available by the local gateway **105,** possibly through a web browser, is shown in Figure 12. It is envisaged that the graphical user interface will initially present a dashboard **1201,** allowing a user of the local gateway **105** to perform common tasks for such a device, such as adding a new device, adding a user, viewing reports on existing users, configuring their network access policies, and setting up a guest user policy - the latter option defining a standard set of terms of network access when connected to the residential local area network provided by the local gateway **105** for unregistered devices.

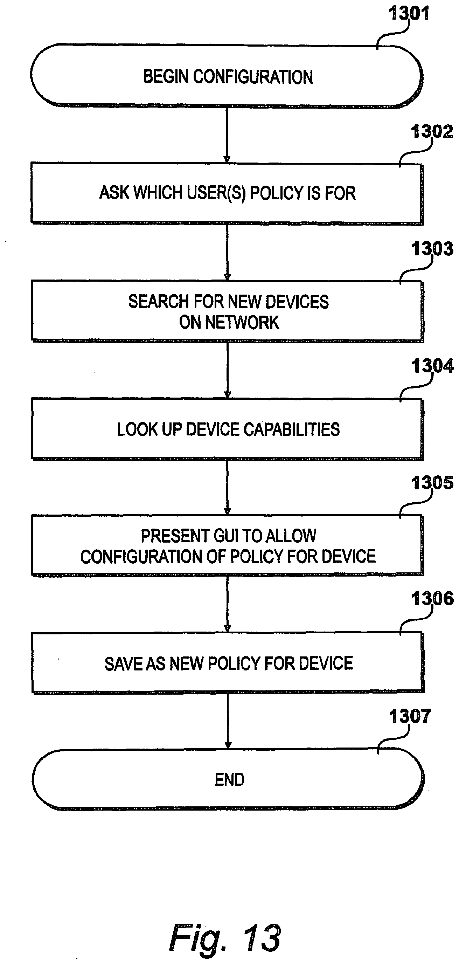

In this example, a user has, using a pointer **1202,** clicked on a link **1203** to add a new device. Figures 13 to 18 set out the procedures and outcomes of doing so.

### Figure 13

An overview of procedures invoked by when adding a new device and its registration with local gateway **105** is shown in Figure 13.

Configuration begins at step **1301** with the selection of the link **1203** in the graphical user interface identified in Figure 12. At step **1302,** the user with which the new device should be associated is queried. At step **1303,** a search is conducted in the present embodiment by using Universal Plug and Play (UPnP) procedures of the residential local area network for devices which are not yet registered on the local gateway **105.** Any new devices are then queried for their capabilities at step **1304,** returning, if UPnP is used, an XML device description document. At step **1305,** a graphical user interface is presented to allow configuration of a network access policy for the device. This may be either application of an existing network access policy, possibly including the options to make changes, or creation of a bespoke network access policy for the device for example. Whichever the choice, an association between a network access policy and the device is then saved at step **1306,** and configuration ends at step **1307.**

### Figure 14

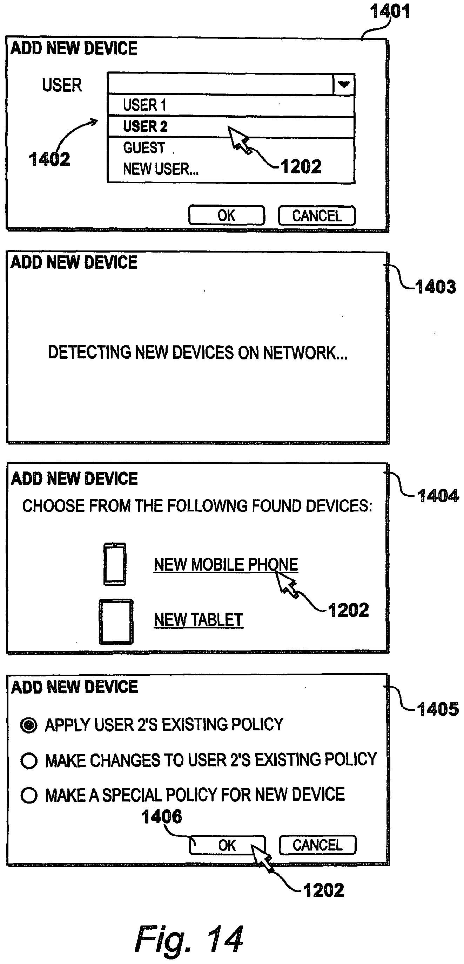

An exemplary set of graphical user interfaces presented to a user during configuration and registration of a new device with local gateway **105** is shown in Figure 14.

A first GUI **1401** corresponding to step **1302** presents a drop down box **1402** from which a user for the new device may be selected. This drop down box **1402** may include, as in the present example, an option to add a new user or define the new device only as a guest. In the present example, USER 2 is selected using pointer **1202.**

A second GUI **1403** is then presented whilst UPnP (Universal Plug and Play) discovery takes place at step **1303.** Following this, a third GUI **1404** is presented when new devices have been identified and their attributes known following step **1304.**

In this example, the new device to be added is a new mobile phone, selected by pointer **1202.** A fourth **GUI 1405** is then presented corresponding to step **1305,** allowing selection of application of USER 2's existing network access policy, the choice of making a change to USER 2's existing network access policy, or the definition of a special network access policy solely for the new device. Clicking of an OK button **1406** by pointer **1202** then invokes step **1306,** in this case associating USER 2's existing network access policy with the new device.

### Figure 15

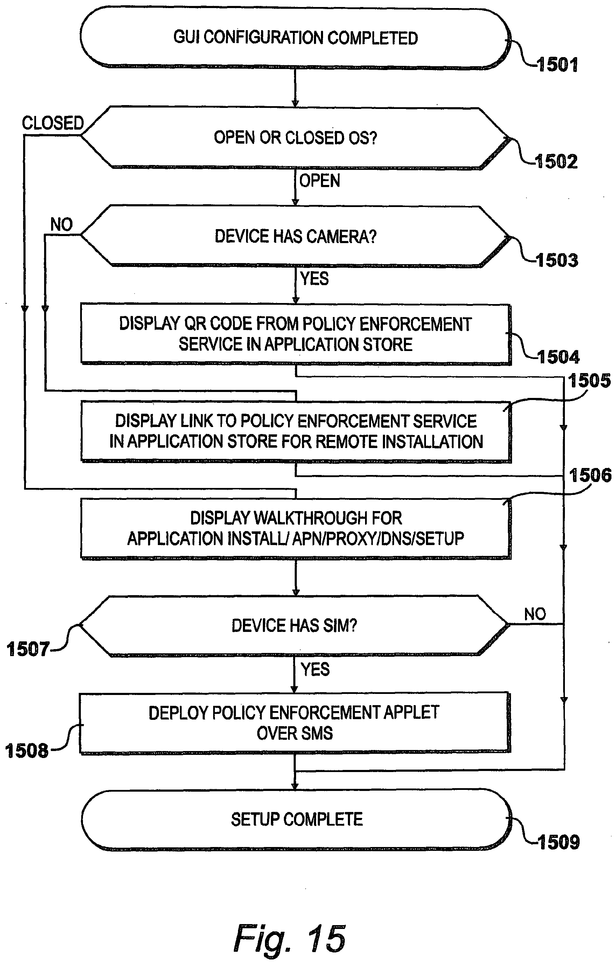

Procedures undertaken by local gateway **105** following step **1307** are shown in Figure 15.

After GUI configuration has been completed (step **1501),** a question is asked at step **1502** as to whether the added device has an open or a closed operating system. If the device has an open operating system, then at step **1503** a question is asked as to whether the device has a camera. If so, then at step **1504** a QR code is displayed embedding a link to an installer in the appropriate application store for the device for installation of the policy update service **1104** and the policy enforcement service **1105.** If the device does not have a camera, then at step **1505** a clickable link is displayed to enable remote installation of the policy update service **1104** and the policy enforcement service **1105** using known application store services. Setup is then complete at step **1509.**

If the question asked at step **1502** determined that the operating system was closed, then control proceeds to step **1506** where a walkthrough is displayed to enable the user to configure DNS, proxy server and APN settings as appropriate. A question is then asked at step **1507** as to whether the device has a USIM card installed. If this question is answered in the affirmative, then at step **1508** the policy update and enforcement applets **1008** and **1009** are sent to the device using SMS data download-type messages. Automatic installation then takes place on the USIM of the new device in accordance with the USIM application toolkit specification. Step **1508** is skipped if the question asked at step **1507** is answered in the negative. Again, setup is then complete at step **1509.**

### Figure 16

If the addition of a new device also involved an update to a creation of a new network access policy, or indeed a user's network access policy was changed directly from dashboard **1201** at one of the user terminals in the logical device family overseen by local gateway **105,** then measures must be taken to deploy it to all appropriate devices. Procedures carried out by the distribution service **508** to update a network access policy are shown in Figure 16.

At step **1601,** a question is asked at to whether any of the network access policies **510** have been updated or if any new policies have been created through the GUI, and then stored in memory at the local gateway **105.** If answered in the negative, then control proceeds directly to step **1606** where the distribution service **508** waits for a predetermined polling interval.

However, if the question asked at step **1601** is answered in the affirmative, then the updated network access policy is read at step **1602** and converted to a bitstream at step **1603.** The conversion to a bitstream, as described previously with reference to Figure 2, involves the conversion of the network access policy into a bit array. Public key encryption then takes place at step **1604,** and distribution to the appropriate devices occurs at step **1605,** which step will be described in further detail with reference to Figure 17. After distribution is complete control proceeds to step **1606** where the distribution service **508** waits for a polling interval until returning to step **1601.**

### Figure 17

Steps carried out during step **1605** to distribute a policy to all applicable devices are shown in Figure 17.

At step **1701,** the device table **512** is read and the devices to which the particular network access policy should be distributed are ascertained. In the present embodiment, this involves identifying the network access policy currently installed on the device, details of which are stored in the devices table **512.** The first matching device is selected at step **1702,** and at step **1703** a question is asked as to whether the device has a USIM. If it does, then at step **1704** an SMS data download message is sent to the device containing the network access policy in its bitstream format. If the question asked at step **1703** was answered in the negative, then control proceeds to step **1705** in which the network access policy in its bitstream format is sent to the device using a peer to peer connection, possibly using a distributed hash table or similar technique to allow identification of the device despite network address translation etc.

Control proceeds to step **1706** from either step **1704** or step **1705** whereupon a question is asked as to whether any more devices require the network access policy to be sent to them. If answered in the affirmative then control returns to step **1702** where the next device is selected from the devices table **512.** Otherwise, control proceeds to step **1707** where the network access policy is sent to the enforcement server using a peer to peer connection. Step **1605** is then complete.

### Figure 18

Following completion of the addition of devices, users, policies and the distribution thereof, relationships can be mapped out between the entities. Such a relationship diagram is shown in Figure 18.

The logs **511** are related to each user, defined in the users table **513.** This relationship is many-to-one, in that each user may have many logs, and those logs are specific to one user. The users table **513** is related to the device table **512** in a many-to-one relationship, in that one user may have many devices. Network access policies **510** may individually be related to many users, as a plurality of users may share the same network access policy. In addition, many devices may share the same device-specific network access policy.

### POLICY ENFORCEMENT

### Figure 19

A high level overview of procedures undertaken to enforce a network access policy against TCP/IP data is set out in Figure 19. The illustrated steps are suitable for execution by all of policy enforcement service **506** on local gateway **105,** policy enforcement service **706** on policy enforcement server **110,** or policy enforcement service **1105** on smartphone **103.**

At step **1901,** packet inspection takes place. In the present embodiment, stream processing is employed to improve data throughput rates. At step **1902,** a question is asked as to whether an HTTPS session is being initiated by a browser. If so, the present invention provides a mechanism by which such sessions can be supplemented with information pertaining to the veracity and trustworthiness of the service provide. Thus at step **1903,** the destination website is screened. In the present embodiment screening includes a process of cross referencing the local company register (by scraping the privacy policy etc. for a company name) and domain registrar data along with analysing the competency of the spelling and grammar on the site. Following this analysis, a question is asked as to whether the destination website is suspected of being fraudulent. If so, then the HTTPS session is tagged such that the webpages include a warning message for the user, alerting them to the low trustworthiness of the website. This could be achieved by injection of additional HTML into the webpages delivered to the browser.

If no HTTPS session is initiated, or the website is not deemed to be suspect, the control proceeds to step **1906** where the network access policy is applied. Procedures carried out in step **1906** are described further with reference to Figures 20 to 26.

### Figure 20

In order to determine whether a content being received via the Internet complies with the network access policy, it is intercepted to allow a degree of processing to be performed on the packet to extract its content and put it in context with other packets takes place at step **2001.** Step **2001** will be described in further detail with reference to Figure 21.

At step **2002,** following processing of the packet a question is asked as to whether it meets the content restrictions. Steps carried out to determine the response to this question are set out in Figure 22. If so, then a question is asked at step **2003** as to whether it meets the time of day restrictions. If so, the a question is asked as to whether the source or destination of the data meets the restrictions defined in the network access policy, such as blacklisted websites. If so, then a question is asked as to whether any other of the terms of the network access policy are met. If so, then the packet complies with the network access policy and is allowed at step **2006.** If any one of the questions asked at steps **2002** to **2005** is answered in the negative, then the packet does not meet the terms of the network access policy and the packet is disallowed at step **2007.**

### Figure 21

Steps carried out to process packet contents so as to perform content based filtering are set out in Figure 21.

At step **2101,** a question is asked as to whether the packet is destined for or originates from an approved application, set out in the network access policy. If so, then a question is asked as to whether the content includes any text. If so, then language processing is performed at step **2103** in line with the degree of linguistic filtering set out in the network access policy, along with application of keyword filtering.

A question is then asked at step **2104** as to whether any image content is present. If so, then image filtering is applied at **2105** to identify any prohibited content. At step **2106,** arrived at also if either question asked at steps **2102** or **2104** was answered in the negative, then a heuristic matching procedure is applied to identify any other content contravenes the policy, despite not being identified as text or image. Following these three steps of analysis, a question is asked at step **2107** as to whether there has been a contravention of the policy. If not, then step **2001** is complete. If there has been a contravention, then a contravention flag is set at **2108.**

### Figure 22

Following content analysis during step **2001,** it must be determined whether to approve or deny the content. The present invention takes a pragmatic approach, appreciating that a complete block on offending messages for example is not always the fairest approach. To this end, an embodiment of the present invention employs a "three strikes" approach by offering, for example a user to confirm whether they really want to send a message, or if they really want to view certain content.

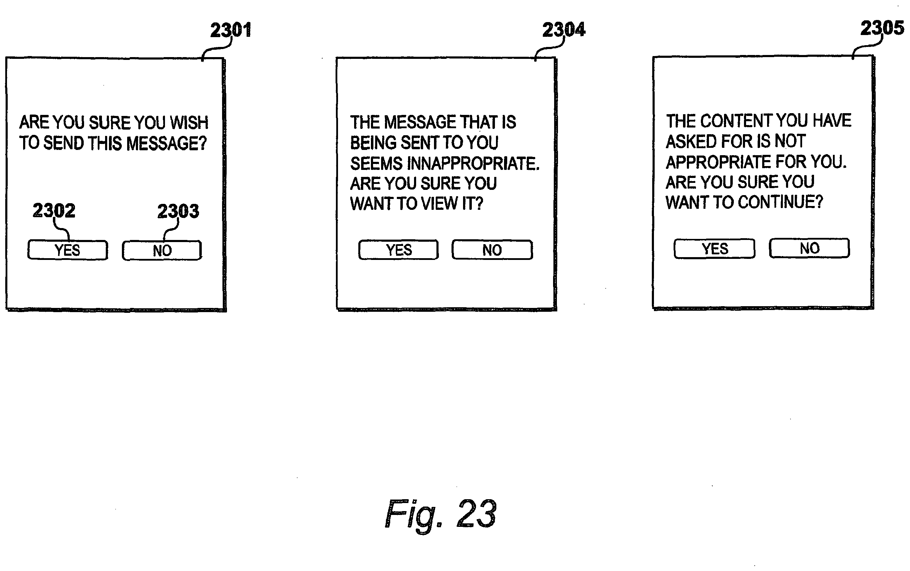

Thus step **2002** involves firstly asking at step **2201** a question as to whether a contravention was identified at step **2001,** by determining whether the contravention flag was set during step **2208.** If so, then a contravention counter is incremented at step **2202.** A question is asked at step **2203** as to whether a contravention threshold has now been exceeded. In the present example, the threshold is three. If not, then at step **2204** a warning is given. In the present example this is an alert displayed to the user, dependent on the nature of the contravention. Example alerts are identified in Figure 23.

Following issuance of a warning, a response is waited on at step **2205,** and at step **2206** a question is asked as to the nature of the input given in response to the warning. If the response is to proceed, then at step **2207** the content is logged with the local gateway **105** and the content is approved at step **2208.** Step **2208** is also invoked if the question asked at step **2201** was answered in the negative, to the effect that no contravention was identified. If the response given to the warning at step **2204** was to not proceed, then the request is dropped at step **2209.** Following step **2208** or **2209,** step **2002** is complete.

If the question asked at step **2203** was answered in the affirmative, to the effect that the contravention threshold was exceed, then an alert is immediately sent to a guardian at step **2210,** possibly via email or SMS message, and the content is denied at step **2211.** Step **2002** is then complete.

### Figure 23

Example warning dialog boxes which can be displayed on a user terminal, either by browser pop up, USIM application toolkit dialogs or operating system alerts, are shown in Figure 23.

Thus following interception of the dispatch of a message from a text-based application, such as an SMS application or a real-time chat application, a first warning dialog box **2301** can be deployed if a user attempts to send a message containing unsavoury language for example. The linguistic filtering will capture the language and identify it as being prohibited in accordance with the network access policy. A moment's pause can be had to reflect on the message and whether it really should be sent. In response to selection of the "YES" button **2301,** the message will be sent but also logged at local gateway **105** for review. In this way, a log is made and stored in memory at the local gateway **105** when a prohibited action is attempted at a user terminal. In response to selection of the "NO" button **2302,** the user will return to composing the message and thus has the opportunity to edit its content.

A second warning dialog box **2304** can be deployed when an incoming message, either text (e.g. SMS) or picture based (e.g. MMS) for example, is determined to be inappropriate in accordance with the network access policy it is screened against. A third warning dialog box **2305** can be deployed for example when a web resource is determined, possibly by the heuristic matching procedure, to be inappropriate, possibly with reference to the user's sex and age.

### Figure 24

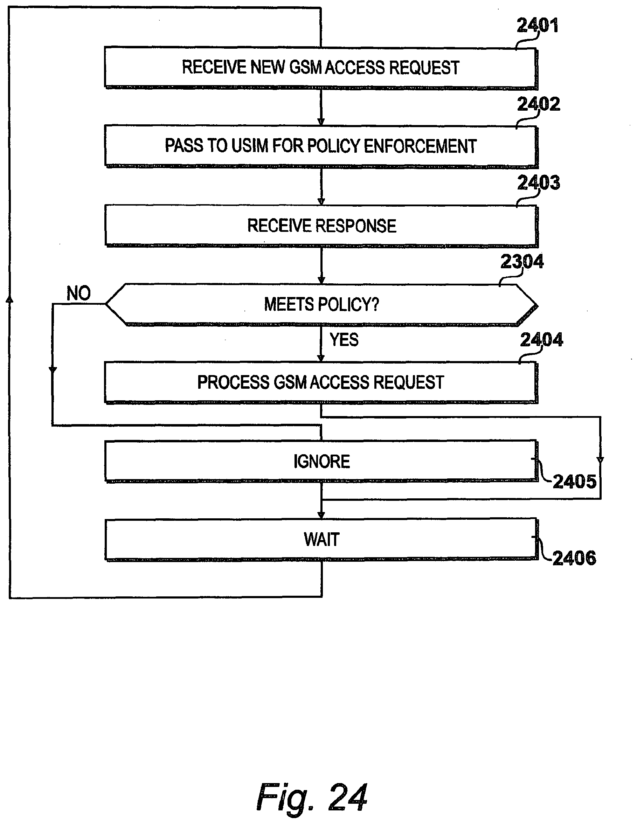

Procedures carried out by the baseband service **1003** when a GSM access request is received (e.g. call or SMS) are set out in Figure 24.

At step **2401,** an access request is received, possibly from the phone or SMS applications **1005,** or because an incoming call or SMS is being received. In accordance with the standard GSM specification, this request is passed to the USIM **806** at step **2402,** where policy enforcement may be carried out by the policy enforcement applet **1009.** In this way, the access request is intercepted. A response is then received from the USIM **806** at step **2403,** and a question is asked at step **2404** as to whether the access request met the policy. If it did, then the request is processed at step **2405,** and if it did not then it is ignored at step **2406.** The baseband service **1003** then waits at step **2407** for the next GSM access request.

### Figure 25

As described previously, the policy enforcement applet **1009** is registered with the USIM application toolkit of the USIM **806** to be called into action when certain GSM events are identified, such as Call Control and SMS Control.

Thus when the GSM access request is passed to the USIM **806** by the baseband service **1003,** the requests are in turn passed to the policy enforcement applet **1009** whereupon a decision can be made as to their compliance with the network access policy **109.** Procedures carried out to assess a GSM access request's compliance are detailed in Figure 25

At step **2501,** the GSM access request is received (intercepted) by policy enforcement applet **1009,** and at step **2502** a question is asked as to the nature of the request. If it is an SMS message, then the message contents are processed at step **2503** which will be described further with reference to Figure 26. Following processing, a question is asked at step **2504** as to whether the message meets the content restrictions of network access policy **109.**

If so, or if the access request is a call, then a question is asked at step **2505** as to whether it meets the time of day restrictions. If so, then a question is asked at step **2506** as to whether the source or destination of the request meets the restrictions defined in the network access policy **109,** such as blocked numbers. If so, then a question is asked at step **2507** as to whether any other of the terms of the network access policy are met. If so, then the access request complies with the network access policy **109** and is allowed at step **2508.**

If any one of the questions asked at steps **2504** to **2507** is answered in the negative, then the request does not meet the terms of the network access policy **109** and the request is disallowed at step **2509.** The appropriate response is therefore sent to the baseband service **1003** at step **2510.**

### Figure 26

As described previously, the content of an SMS message is processed to determine if it contravenes the network access policy **109.** Step **2503** is set out in detail in Figure 26.

At step **2601,** a question is asked as to whether a data connection is available. If so, then at step **2602** the SMS message contents are transmitted using bearer independent protocol via the baseband processor **805** to the policy enforcement server **110,** where its natural language processing and sentiment analysis services can be utilised. A question is then asked at step **2603** as to whether the message is approved or denied. If approved, then the message is set as meeting the content restrictions at step **2606,** and then the question asked at step **2504** may be answered in the affirmative. If not, then then the message is set as not meeting the content restrictions at step **2607,** and so the question asked at step **2504** may be answered in the negative.

If no data connection is available, then the local dictionary **1010** is used to enable a regular expression search of the message for keywords that are not allowed by the policy at step **2604.** A question is then asked at step **2605** as to whether a match has been found. If not, then again the message is set as meeting the content restrictions at step **2606,** and the question asked at step **2504** may be answered in the affirmative. If not, then then the message is set as not meeting the content restrictions at step **2607,** and the question asked at step **2504** may be answered in the negative.

## Claims

1. A system in which a network access policy (109) is distributed from a gateway device (105) to each one of a plurality of user terminals (101, 102, 103, 104) forming a logical device family for enforcement of said network access policy, wherein:
the gateway device is configured as a router between the Internet (106) and a private local area network;
each one of the plurality of user terminals is capable of connecting to either the private local area network or a cellular data network (107) to access the Internet, and is capable of accessing a GSM cellular telecommunications network;
the gateway device is configured to distribute the network access policy to each one of the plurality of user terminals, said network access policy having user-defined parameters specifying terms of access to the Internet; and
each of said user terminals is configured:
to receive data packets, wherein each said data packet may be received via said private local area network, via said cellular data network, or via another network, and to receive requests for communication over the GSM cellular telecommunications network; and
to process each said data packet or request to determine whether said packet or request is compliant or not compliant with said network access policy, and:
if a data packet is determined to be not compliant, disallow it, and
if a request is determined to be not compliant, ignore it.

2. The system of claim 1, in which the user-defined parameters specify at least one of:
allowed periods of access to the Internet; and
acceptable usage of the Internet.

3. The system of claim 2, in which the user-defined parameters prohibit at least one of:
access to particular websites;
use of particular applications; and
sending or receipt of messages containing prohibited content.

4. The system of claim 3, in which a log (511) is made and stored in memory at the gateway device when a prohibited action is attempted at a user terminal.

5. The system of any one of claims 1 to 4, in which at least one of said user terminals is configured to process each said data packet or request using an application running on a subscriber identity module (806) in said user terminal.

6. The system of claim 5, in which said application passes the content of a request via a network to a server (110), and receives a response from said server indicating whether said content is compliant or not compliant with said network access policy.

7. The system of any one of claims 1 to 4, in which at least one of said user terminals is configured to process each said data packet or request using an application running on a CPU (601) in said user terminal.

8. The system of claim 1, in which the gateway device is configured to:
receive an instruction via a graphical user interface (1201) at one of the plurality of user terminals in the logical device family to create a new network access policy;
create and store the new network access policy in non-volatile memory in the gateway device;
convert the new network access policy into a bitstream for distribution to each one of the user terminals;
distributing the new network access policy as said bitstream to each one of the user terminals.

9. A method in which a network access policy (109) is distributed from a gateway device (105) to each one of a plurality of user terminals (101, 102, 103, 104) forming a logical device family for enforcement of said network access policy, in which:
the gateway device is configured as a router between the Internet (106) and a private local area network, and
each one of the plurality of user terminals is capable of connecting to either the private local area network or a cellular data network (107) to access the Internet, and is capable of accessing a GSM cellular telecommunications network;
and the method comprises:
distributing, by the gateway, the network access policy to each one of the plurality of user terminals, said network access policy having user-defined parameters specifying terms of access to the Internet; and
at each one of the plurality of user terminals:
receiving data packets, wherein each said data packet may be received via said private local area network, via another network, or via said cellular data network, and receiving requests for communication over the GSM cellular telecommunications network;
processing each said data packet or request to determine whether said packet or request is compliant or not compliant with said network access policy, and
if a data packet is determined to be not compliant, disallowing it, and
if a request is determined to be not compliant, ignoring it.

10. The method of claim 9, in which the user-defined parameters specify at least one of:
allowed periods of access to the Internet; and
acceptable usage of the internet.

11. The method of claim 10, in which the user-defined parameters prohibit at least one of:
access to particular websites;
use of particular applications; and
sending or receipt of messages containing prohibited content.

12. The method of claim 11, in which a log (511) is made and stored in memory at the gateway device when a prohibited action is attempted at a user terminal.

13. The method of any one of claims 9 to 12, in which said step of processing each said data packet or request is performed at at least one of said user terminals using an application running on a subscriber identity module (806) in said user terminal.

14. The method of claim 13, in which said step of processing a request comprises passing the content of said request via a network to a server (110), and receiving a response from said server indicating whether said content is compliant or not compliant with said network access policy.

15. The method of any one of claims 9 to 12, in which said step of processing each said data packet or request is performed at at least one of said user terminals using an application running on a CPU (601) in said user terminal.

16. The method of claim 9, in which the gateway performs the steps of:
receiving an instruction via a graphical user interface (1201) at one of the plurality of user terminals in the logical device family to create a new network access policy for distribution to at least one of the user terminals;
creating and storing the new network access policy in non-volatile memory in the gateway device;
converting the new network access policy into a bitstream at the gateway device for distribution to each one of the user terminals.

## Patentansprüche

1. System, in dem ein Netzwerkzugriffsregelwerk (109) von einer Gatewayvorrichtung (105) zu jedem von einer Mehrzahl von Benutzerendgeräten (101, 102, 103, 104) verteilt wird, die eine logische Vorrichtungsfamilie bilden, für die Durchsetzung des Netzwerkzugriffsregelwerks, wobei:
die Gatewayvorrichtung als ein Router zwischen dem Internet (106) und einem privaten lokalen Netzwerk konfiguriert ist;
jedes von der Mehrzahl von Benutzerendgeräten in der Lage ist, sich entweder mit dem privaten lokalen Netzwerk oder einem zellulären Datennetzwerk (107) zu verbinden, um auf das Internet zuzugreifen, und in der Lage ist, auf ein zelluläres GSM-Telekommunikationsnetzwerk zuzugreifen;
die Gatewayvorrichtung dazu konfiguriert ist, das Netzwerkzugriffsregelwerk zu jedem von der Mehrzahl von Benutzerendgeräten zu verteilen, wobei das Netzwerkzugriffsregelwerk benutzerdefinierte Parameter hat, die die Zugriffsbedingungen zum Internet spezifizieren; und
jedes von den Benutzerendgeräten zu folgendem konfiguriert ist:
Datenpakete zu empfangen, wobei jedes von den Datenpaketen über das private lokale Netzwerk, über das zelluläre Datennetzwerk oder ein anderes Netzwerk empfangen werden kann, und Anfragen für eine Kommunikation über das zelluläre GSM-Telekommunikationsnetzwerk zu empfangen; und
jedes von den Datenpaketen oder Anfragen zu verarbeiten, um zu bestimmen, ob das Paket oder die Anfrage mit dem Netzwerkzugriffsregelwerk konform oder nicht konform ist, und
wenn ein Datenpaket als nicht konform bestimmt wird, es abzuweisen, und
wenn eine Anfrage als nicht konform bestimmt wird, sie zu ignorieren.

2. System nach Anspruch 1, in dem die benutzerdefinierten Parameter wenigstens eines von folgenden spezifizieren:
erlaubte Perioden eines Zugriffs auf das Internet; und
eine akzeptable Verwendung des Internets.

3. System nach Anspruch 2, in dem die benutzerdefinierten Parameter wenigstens eines von folgenden verbieten:
Zugriff auf bestimmte Webseiten;
Verwendung von bestimmten Anwendungen; und
Senden oder Empfangen von Nachrichten, die verbotenen Inhalt enthalten.

4. System nach Anspruch 3, in dem ein Log (511) erstellt und in einem Speicher bei der Gatewayvorrichtung gespeichert wird, wenn eine verbotene Aktion bei einem Benutzerendgerät versucht wird.

5. System nach einem der Ansprüche 1 bis 4, in dem wenigstens eines von den Benutzerendgeräten dazu konfiguriert ist, jedes Datenpaket oder Anfrage unter Verwendung einer Anwendung zu verarbeiten, die auf einem Subscriberidentitätsmodul (806) in dem Benutzerendgerät läuft.

6. System nach Anspruch 5, in dem die Anwendung den Inhalt einer Anfrage über ein Netzwerk zu einem Server (110) weiterleitet, und von dem Server eine Antwort empfängt, die angibt, ob der Inhalt mit dem Netzwerkzugriffsregelwerk konform oder nicht konform ist.

7. System nach einem der Ansprüche 1 bis 4, in dem wenigstens eines von den Benutzerendgeräten dazu konfiguriert ist, jedes Datenpaket oder Anfrage unter Verwendung einer Anwendung zu verarbeiten, die auf einer CPU (601) in dem Benutzerendgerät läuft.

8. System nach Anspruch 1, in dem die Gatewayvorrichtung zu folgendem konfiguriert ist:
Empfangen einer Instruktion über ein Graphical user interface (1201) bei einem von der Mehrzahl von Benutzerendgeräten in der logischen Vorrichtungsfamilie zur Erzeugung eines neuen Netzwerkzugriffsregelwerks;
Erzeugen und Speichern des neuen Netzwerkzugriffsregelwerks in einem nicht flüchtigen Speicher in der Gatewayvorrichtung;
Umwandeln des neuen Netzwerkzugriffsregelwerks in einen Bitstrom zur Verteilung zu jedem von den Benutzerendgeräten;
Verteilen des neuen Netzwerkzugriffsregelwerks als der Bitstrom zu jedem von den Benutzerendgeräten.

9. Verfahren, in dem ein Netzwerkzugriffsregelwerk (109) von einer Gatewayvorrichtung (105) zu jedem von einer Mehrzahl von Benutzerendgeräten (101, 102, 103, 104) verteilt wird, die eine logische Vorrichtungsfamilie bilden, zur Durchsetzung des Netzwerkzugriffsregelwerks, in dem:
die Gatewayvorrichtung als ein Router zwischen dem Internet (106) und einem privaten lokalen Netzwerk konfiguriert ist;
jedes von der Mehrzahl von Benutzerendgeräten in der Lage ist, sich entweder mit dem privaten lokalen Netzwerk oder einem zellulären Datennetzwerk (107) zu verbinden, um auf das Internet zuzugreifen, und in der Lage ist, auf ein zelluläres GSM-Telekommunikationsnetzwerk zuzugreifen;
und wobei das Verfahren umfasst:
Verteilen, durch das Gateway, des Netzwerkzugriffsregelwerks zu jedem von der Mehrzahl von Benutzerendgeräten, wobei das Netzwerkzugriffsregelwerk benutzerdefinierte Parameter hat, die Bedingungen zum Zugriff auf das Internet spezifizieren; und
bei jedem von der Mehrzahl von Benutzerendgeräten:
Empfangen von Datenpaketen, wobei jedes von den Datenpaketen über das private lokale Netzwerk, über das zelluläre Datennetzwerk oder ein anderes Netzwerk empfangen werden kann, und Anfragen für eine Kommunikation über das zelluläre GSM-Telekommunikationsnetzwerk zu empfangen; und
Verarbeiten von jedem von den Datenpaketen oder Anfragen, um zu bestimmen, ob das Paket oder die Anfrage mit dem Netzwerkzugriffsregelwerk konform oder nicht konform ist, und
wenn ein Datenpaket als nicht konform bestimmt wird, es abzuweisen, und
wenn eine Anfrage als nicht konform bestimmt wird, sie zu ignorieren.

10. Verfahren nach Anspruch 9, in dem die benutzerdefinierten Parameter wenigstens eines von folgenden spezifizieren:
erlaubte Perioden eines Zugriffs auf das Internet; und
eine akzeptable Verwendung des Internets.

11. Verfahren nach Anspruch 10, in dem in dem die benutzerdefinierten Parameter wenigstens eines von folgenden verbieten:
Zugriff auf bestimmte Webseiten;
Verwendung von bestimmten Anwendungen; und
Senden oder Empfangen von Nachrichten, die verbotenen Inhalt enthalten.

12. Verfahren nach Anspruch 11, in dem ein Log (511) erstellt und in einem Speicher bei der Gatewayvorrichtung gespeichert wird, wenn eine verbotene Aktion bei einem Benutzerendgerät versucht wird.

13. Verfahren nach einem der Ansprüche 9 bis 12, in dem der Schritt des Verarbeitens jedes Datenpakets oder jeder Anfrage bei wenigstens einem von den Benutzerendgeräten unter Verwendung einer Anwendung durchgeführt wird, die auf einem Subscriberidentitätsmodul (806) in dem Benutzerendgerät äuft.

14. Verfahren nach Anspruch 13, in dem der Schritt des Verarbeitens einer Anfrage ein Weiterleiten des Inhalts der Anfrage über ein Netzwerk zu einem Server (110) umfasst, und ein Empfangen einer Antwort von dem Server, die angibt, ob der Inhalt mit dem Netzwerkzugriffsregelwerk konform oder nicht konform ist.

15. Verfahren nach einem der Ansprüche 9 bis 12, in dem der Schritt des Verarbeitens jedes Datenpakets oder jeder Anfrage bei wenigstens einem von den Benutzerendgeräten unter Verwendung einer Anwendung durchgeführt wird, die auf einer CPU (601) in dem Benutzerendgerät läuft.

16. Verfahren nach Anspruch 9, in dem das Gateway die folgenden Schritte durchführt:
Empfangen einer Instruktion über ein Graphical user interface (1201) bei einem von der Mehrzahl von Benutzerendgeräten in der logischen Vorrichtungsfamilie zur Erzeugung eines neuen Netzwerkzugriffsregelwerks zur Verteilung zu wenigstens einem von den Benutzerendgeräten;
Erzeugen und Speichern des neuen Netzwerkzugriffsregelwerks in einem nicht flüchtigen Speicher in der Gatewayvorrichtung;
Umwandeln des neuen Netzwerkzugriffsregelwerks in einen Bitstrom bei der Gatewayvorrichtung zur Verteilung zu jedem von den Benutzerendgeräten.

## Revendications

1. Système dans lequel une règle (109) d'accès à un réseau est distribuée par un dispositif (105) de passerelle à chacun d'une pluralité de terminaux (101, 102, 103, 104) d'utilisateur formant une famille logique de dispositifs pour l'application de ladite règle d'accès à un réseau, dans lequel :
le dispositif de passerelle est configuré sous la forme d'un routeur entre l'internet (106) et un réseau privé de zone locale ;
chacun de la pluralité de terminaux d'utilisateur est apte à se connecter au réseau privé de zone locale ou à un réseau (107) de données cellulaire pour accéder à l'internet et est capable d'accéder à un réseau de télécommunications cellulaire GSM ;
le dispositif de passerelle est configuré pour distribuer la règle d'accès à un réseau à chacun de la pluralité de terminaux d'utilisateur, la règle d'accès à un réseau ayant des paramètres définis par l'utilisateur, précisant des termes d'accès à l'internet et
chacun des terminaux d'utilisateurs est configuré :
pour recevoir des paquets de données, chaque paquet de données pouvant être reçu par le réseau privé de zone locale, par le réseau de données cellulaire ou par un autre réseau, et pour recevoir des demandes de communication sur le réseau de télécommunication cellulaire GSM ;
pour traiter chaque paquet de données ou demande afin de déterminer si le paquet ou la demande est conforme ou n'est pas conforme à ladite règle d'accès à réseau et :
s'il est déterminé qu'un paquet de données n'est pas conforme, ne pas l'admettre, et
s'il est déterminé qu'une demande n'est pas conforme, n'en pas tenir compte.

2. Système suivant la revendication 1, dans lequel les paramètres définis par l'utilisateur précisent au moins l'un de :
des durées allouées d'accès à l'internet ; et
un usage acceptable de l'internet.

3. Système suivant la revendication 2, dans lequel les paramètres définis par un utilisateur empêchent au moins l'un de :
un accès à des sites web particuliers ;
l'utilisation d'applications particulières ; et
l'envoi ou la réception de messages ayant un contenu prohibé.

4. Système suivant la revendication 3, dans lequel un journal (511) est fait et mis en mémoire au dispositif de passerelle, lorsqu'une action prohibée est tentée à un terminal d'utilisateur.

5. Système suivant l'une quelconque des revendications 1 à 4, dans lequel au moins l'un des terminaux d'utilisateur est configuré pour traiter chaque paquet de données ou demande en utilisant une application passant sur un module (806) d'identité d'abonné du terminal d'utilisateur.

6. Système suivant la revendication 5, dans lequel l'application passe le contenu d'une demande par l'intermédiaire d'un réseau à un serveur (110) et reçoit une réponse du serveur indiquant si le contenu est conforme ou n'est pas conforme à la règle d'accès à un réseau.

7. Système suivant l'une quelconque des revendications 1 à 4, dans lequel au moins l'un des terminaux d'utilisateur est configuré pour traiter chaque paquet ou demande en utilisant une application passant sur une CPU (601) du terminal d'utilisateur.

8. Système suivant la revendications 1, dans lequel le dispositif de passerelle est configuré pour :
recevoir une instruction par l'intermédiaire d'une interface (1201) d'utilisateur graphique à l'un de la pluralité de terminaux d'utilisateur dans la famille de dispositifs logiques pour créer une nouvelle règle d'accès à un réseau ;
créer et mettre en mémoire la nouvelle règle d'accès à un réseau dans une mémoire non-volatile du dispositif de passerelle ;
transformer la nouvelle règle d'accès à réseau en un flux de bits pour distribution à chacun des terminaux d'utilisateur ;
distribuer la nouvelle règle d'accès à un réseau sous la forme dudit flux de bits à chacun des terminaux d'utilisateur.

9. Procédé dans lequel une règle (109) d'accès à un réseau est distribuée d'un dispositif (105) de passerelle à chacun d'une pluralité de terminaux (101, 102, 103, 104) d'utilisateur formant une famille de dispositifs logiques pour l'application de ladite règle d'accès à un réseau, dans lequel :
le dispositif de passerelle est configuré sous la forme d'un routeur entre l'internet (106) et un réseau privé de zone locale ;
chacun de la pluralité de terminaux d'utilisateur est apte à se connecter au réseau privé de zone locale ou à un réseau (107) de données cellulaire pour accéder à l'internet et est capable d'accéder à un réseau de télécommunications cellulaire GSM ;
et le procédé comprend :
distribuer, par la passerelle, la règle d'accès à un réseau à chacun de la pluralité de terminaux d'utilisateurs, la règle d'accès à un réseau ayant des paramètres définis par l'utilisateur précisant des termes d'accès à l'internet ; et
à chacun de la pluralité de terminaux d'utilisateur :
recevoir des paquets de données, dans lequel chaque paquet de données peut être reçu par l'intermédiaire du réseau privé de zone locale, par l'intermédiaire d'un autre réseau ou par l'intermédiaire du réseau de données cellulaire et recevoir des demandes de communication sur le réseau de télécommunication cellulaire GSM ;
traiter chaque paquet de données ou demande pour déterminer si le paquet ou la demande est conforme ou n'est pas conforme à la règle d'accès à un réseau et
s'il est déterminé qu'un paquet de données n'est pas conforme, ne pas l'autoriser et
s'il est déterminé qu'une demande n'est pas conforme, n'en pas tenir compte.

10. Procédé suivant la revendication 9, dans lequel les paramètres définis par l'utilisateur précisent au moins l'un de :
des durées allouées d'accès à l'internet ; et
un usage acceptable de l'internet.

11. Procédé suivant la revendication 10, dans lequel les paramètres définis par un utilisateur empêchent au moins l'un de :
un accès à des sites web particuliers ;
l'utilisation d'applications particulières ; et
l'envoi ou la réception de messages ayant un contenu prohibé.

12. Procédé suivant la revendication 11, dans lequel le journal (511) est fait et mis en mémoire au dispositif de passerelle lorsqu'une action prohibée est tentée à un terminal d'utilisateur.

13. Procédé suivant l'une quelconque des revendications 9 à 12, dans lequel le stade de traitement de chaque paquet de données ou demande est effectué à au moins l'un des terminaux d'utilisateur utilisant une application passant sur un module (806) d'identité d'abonné dudit terminal d'utilisateur.

14. Procédé suivant la revendication 13, dans lequel le stade de traitement d'une demande comprend passer le contenu de la demande par l'intermédiaire d'un réseau à un serveur (110) et recevoir une réponse du serveur indiquant si le contenu est conforme ou n'est pas conforme à la règle d'accès à un réseau.

15. Procédé suivant l'une quelconque des revendications 9 à 12, dans lequel le stade de traitement de chaque paquet de données ou demande est effectué à au moins l'un des terminaux d'utilisateur utilisant une application passant sur une CPU (601) du terminal d'utilisateur.

16. Procédé suivant la revendication 9, dans lequel la passerelle effectue les stades de :
recevoir une instruction par l'intermédiaire d'une interface (1201) d'utilisateur gratuit à l'un de la pluralité de terminaux d'utilisateurs de la famille de dispositifs logiques pour créer une nouvelle règle d'accès à un réseau pour distribution à au moins l'un des terminaux d'utilisateur ;
créer et mettre en mémoire la nouvelle règle d'accès à un réseau dans une mémoire non volatile du dispositif de passerelle ;
transformer la nouvelle règle d'accès à réseau en un flux de bits au dispositif de passerelle pour distribution à chacun des terminaux d'utilisateur.
